# EUROPEAN PATENT APPLICATION

(11) **EP 4 242 031 A1**
(43) Date of publication of application: **13.09.2023**
(21) Application number: 22213296.1
(22) Date of filing: 13.12.2022
(51) Int. Cl.: B60K 6/387, B60K 6/48, B60K 6/547, B60K 6/365, B60K 6/405

(54) **WORK VEHICLE**

(30) Priority: 11.03.2022 JP 2022038613
(71) Applicant: Kubota Corporation, Osaka-shi, Osaka 5568601 (JP)
(72) Inventor: HIRASE, Yuji, SAKAI-SHI, OSAKA 5900908 (JP); YAGYU, Sumio, SAKAI-SHI, OSAKA 5900908 (JP); OKAZAKI, Kazuto, SAKAI-SHI, OSAKA 5900908 (JP); II, Tsunehiro, SAKAI-SHI, OSAKA 5900908 (JP)
(74) Representative: Cabinet Beau de Loménie

(57) **Abstract**

A hybrid transmission (16) includes an electric transmission portion (16A) including a motor generator portion (24), and a gear transmission portion (16B) including a gear driving mechanism (30) without a motor generator. A transmission case (13) includes an electric transmission chamber (28) in which the electric transmission portion (16A) is accommodated, and a gear transmission chamber (29) in which the gear transmission portion (16B) is accommodated, the electric transmission chamber (28) and the gear transmission chamber (29) being adjacent to each other. The transmission case (13) includes a partition wall portion (13b) separating the electric transmission chamber (28) from the gear transmission chamber (29) in a non-communication manner.

## Description

### BACKGROUND OF THE INVENTION

### 1. Field of the Invention

The present invention relates to a hybrid work vehicle including a transmission.

### 2. Description of the Related Art

As the abovementioned hybrid work vehicle, there is a tractor described in Patent Literature 1, for example. The tractor described in Patent Literature 1 includes an engine and a hybrid transmission. The hybrid transmission includes an electric transmission portion and a gear transmission portion such that the electric transmission portion and the gear transmission portion are disposed along a vehicle-body front-rear direction. The electric transmission portion includes a motor generator portion (a motor generator), and the gear transmission portion includes a gear driving mechanism (a planetary gear mechanism, a forward-reverse switching device, a gear shifter) without a motor generator. The hybrid transmission is configured to output power from the engine toward travel devices (front wheels, rear wheels). The hybrid transmission is accommodated in a transmission case provided in a vehicle body in a state where the hybrid transmission is side by side with the engine along the vehicle-body front-rear direction.

### Citation List

### Patent Literature

Patent Literature 1: Japanese Unexamined Patent Application Publication No. 2014-65349

### SUMMARY OF THE INVENTION

### Technical Problem

In the related art, in the gear driving mechanism, in a case where, because of a plurality of gears being placed at different positions in the up-down direction, a lubricant is accumulated to a level set such that the lubricant easily reaches the gears and the gear driving mechanism is efficiently lubricated, the motor generator portion having a large outside diameter deeply enters the lubricant, and the motor generator portion stirs the lubricant, so that a driving load applied to the motor generator portion increases. This increases a transmission loss in the electric transmission portion. In a case where, in order to restrain the transmission loss in the electric transmission portion, the lubricant is accumulated to a level set such that the motor generator portion does not enter the lubricant so deeply, the lubricant is hard to reach the gears in the gear driving mechanism, so that the gear driving mechanism cannot be lubricated efficiently.

Further, in a case where a lubricant more excellent in lubrication performance than cooling performance is employed so that the gears in the gear driving mechanism are lubricated efficiently, the lubricant more excellent in lubrication performance than cooling performance cools the motor generator portion, so that the motor generator portion is not cooled efficiently. In a case where a lubricant more excellent in cooling performance than lubrication performance is employed so that the motor generator portion is cooled efficiently, the lubricant more excellent in cooling performance than lubrication performance lubricates the gears of the gear driving mechanism, so that the gear driving mechanism cannot be lubricated efficiently.

The present invention provides a hybrid work vehicle that allows a lubricant to be accumulated in a state where lubrication, cooling, and power transmission in a hybrid transmission can be performed efficiently.

### Solution to Problem

A hybrid work vehicle according to the present invention includes: an engine; a hybrid transmission including an electric transmission portion and a gear transmission portion, the electric transmission portion and the gear transmission portion being disposed along a vehicle-body front-rear direction, the electric transmission portion including a motor generator portion, the gear transmission portion including a gear driving mechanism without a motor generator, the hybrid transmission being configured to vary power from the engine and output the power to a travel device; and a transmission case in which the hybrid transmission is accommodated, the transmission case being provided in a vehicle body in a state where the transmission case is side by side with the engine along the vehicle-body front-rear direction. The transmission case includes an electric transmission chamber in which the electric transmission portion is accommodated, and a gear transmission chamber in which the gear transmission portion is accommodated, the electric transmission chamber and the gear transmission chamber being adjacent to each other. The transmission case includes a partition wall portion separating the electric transmission chamber from the gear transmission chamber in a non-communication manner.

In this configuration, the electric transmission chamber and the gear transmission chamber do not communicate with each other by being separated from each other by the partition wall portion. Accordingly, even in a case where lubricants having the same quality are accumulated in the electric transmission chamber and the gear transmission chamber, the level in the gear transmission chamber is set to a level that allows the lubricant to easily reach gears, so that the gear driving mechanism is lubricated efficiently. Further, the level in the electric transmission chamber is set to be lower than the level in the gear transmission chamber so that the motor generator portion does not enter the lubricant so deeply. Hereby, a driving load applied to the motor generator portion is restrained and power transmission can be performed efficiently in the electric transmission portion.

Further, respective lubricants different in oil quality can be accumulated in the gear transmission chamber and in the electric transmission chamber. For example, a lubricant more excellent in lubrication performance than cooling performance can be accumulated in the gear transmission chamber so that the gear driving mechanism is lubricated efficiently, and a lubricant more excellent in cooling performance than lubrication performance can be accumulated in the electric transmission chamber so that the motor generator portion is cooled efficiently. Thus, even in a case where respective lubricants different in oil quality are accumulated in the gear transmission chamber and in the electric transmission chamber, when the level in the gear transmission chamber is set to a level that allows the lubricant to easily reach the gears and the level in the electric transmission chamber is set to be lower than the level in the gear transmission chamber, the gear driving mechanism can be lubricated efficiently, and power transmission can be performed efficiently in the electric transmission portion.

Further, in a case where the vehicle body is inclined in the front-rear direction, the transmission case is inclined in the front-rear direction. In a case where the transmission case has an inclined posture in which the electric transmission chamber side is lowered, the lubricant accumulated in the gear transmission chamber flows toward the electric transmission chamber. However, the lubricant thus flowing is received by the partition wall portion and does not flow into the electric transmission chamber, so that the amount of the lubricant in the gear transmission chamber does not decrease. Hereby, regardless of the inclination posture of the transmission case, it is possible to maintain a state where the gear driving mechanism is easily lubricated. In a case where the transmission case has an inclined posture in which the gear transmission chamber side is lowered, the lubricant accumulated in the electric transmission chamber flows toward the gear transmission chamber. However, the lubricant thus flowing is received by the partition wall portion and does not flow into the gear transmission chamber, so that the amount of the lubricant in the electric transmission chamber does not decrease. Hereby, regardless of the inclination posture of the transmission case, it is possible to maintain a state where the motor generator portion is easily cooled and lubricated.

In the present invention, it is preferable that the motor generator portion include two motor generators.

In this configuration, while one of the two motor generators can be configured to output driving force, the other one of the two motor can be configured to generator generates electric power. Accordingly, it is possible to output the driving force toward the travel devices efficiently and to obtain much electric power.

In the present invention, it is preferable that the electric transmission portion be placed between the engine and the gear transmission portion.

Generally, in a part of the transmission case which part faces the engine, a flywheel housing portion covering a flywheel included in the engine is provided, and the outside diameter of the part of the transmission case which part faces the engine is made large, so that the motor generator portion can be accommodated in the part having the large outside diameter. Accordingly, a motor generator with high output is easily employed.

In the present invention, it is preferable that respective lubricants be accumulated in the electric transmission chamber and in the gear transmission chamber, and it is preferable that the lubricant in the electric transmission chamber has a level different from a level of the lubricant in the gear transmission chamber.

In this configuration, the level of the lubricant in the electric transmission chamber is set to be lower than the level of the lubricant in the gear transmission chamber so that the motor generator portion does not enter the lubricant so deeply and the lubricant easily reaches the gear driving mechanism, for example. Hereby, the lubricants can be accumulated in the electric transmission chamber and the gear transmission chamber in a suitable manner.

In the present invention, it is preferable that the level of the lubricant in the electric transmission chamber be lower than the level of the lubricant in the gear transmission chamber.

In this configuration, in the electric transmission portion, the motor generator portion does not enter the lubricant so deeply, so that a driving load applied to the motor generator portion is restrained and power transmission can be efficiently performed. In the gear transmission portion, the lubricant easily reaches the gears, so that the gear driving mechanism can be lubricated efficiently.

In the above invention, it is preferable that respective lubricants be accumulated in the electric transmission chamber and in the gear transmission chamber, and it is preferable that the lubricant accumulated in the electric transmission chamber and the lubricant accumulated in the gear transmission chamber be different in oil quality.

In this configuration, for example, in the electric transmission portion, a lubricant excellent in cooling performance can act on the motor generator portion to efficiently cool the motor generator portion, and in the gear transmission portion, a lubricant excellent in lubrication performance can act on the gear driving mechanism to efficiently lubricate the gear driving mechanism. Hereby, it is possible to cause respective lubricants having suitable oil qualities to act on the motor generator portion and the gear driving mechanism.

In the present invention, it is preferable that the hybrid work vehicle further include: a first oil supply mechanism including a first hydraulic pump and a first oil supply passage connecting the first hydraulic pump to the electric transmission chamber, the first oil supply mechanism being configured to supply a lubricant to the motor generator; and a second oil supply mechanism including a second hydraulic pump and a second oil supply passage connecting the second hydraulic pump to the gear transmission chamber, the second oil supply mechanism being configured to supply a lubricant to the gear driving mechanism.

In this configuration, it is possible to supply a lubricant advantageous for the motor generator portion such as a lubricant excellent in cooling performance to the motor generator portion by the first oil supply mechanism, and it is possible to supply a lubrication advantageous for the gear driving mechanism such as a lubricant excellent in lubrication performance to the gear driving mechanism by the second oil supply mechanism.

In the present invention, it is preferable that the engine be provided in a front part of the vehicle body, and it is preferable that the transmission case be adjacently provided behind the engine.

In this configuration, the load of the engine is applied to the front part of the vehicle body, so that it is possible to achieve a hybrid work vehicle in a state where the weights of the vehicle body on the front side and on the rear side can be easily balanced even when a work device is connected to a rear part of the vehicle body.

### BRIEF DESCRIPTION OF THE DRAWINGS

Fig. 1 is a side view illustrating the entire structure of a tractor;
Fig. 2 is a schematic view of a traveling power transmission device;
Fig. 3 is an explanatory view in a case where a transmission case has an inclined posture in which its front part is lowered;
Fig. 4 is a circuit diagram of a first oil supply mechanism;
Fig. 5 is a circuit diagram of a second oil supply mechanism;
Fig. 6 is a circuit diagram of an oil supply mechanism according to a different embodiment;
Fig. 7 is a schematic view illustrating a traveling power transmission device according to a first different embodiment;
Fig. 8 is a front view illustrating the arrangement of motor generators in the traveling power transmission device according to the first different embodiment;
Fig. 9 is a schematic view illustrating a traveling power transmission device according to a second different embodiment;
Fig. 10 is a schematic view illustrating a traveling power transmission device according to a third different embodiment;
Fig. 11 is a schematic view illustrating a traveling power transmission device according to a fourth different embodiment; and
Fig. 12 is a schematic view illustrating a traveling power transmission device according to a fifth different embodiment.

### DESCRIPTION OF THE PREFERRED EMBODIMENTS

Embodiments as examples of the present invention will be described below with reference to the drawings.

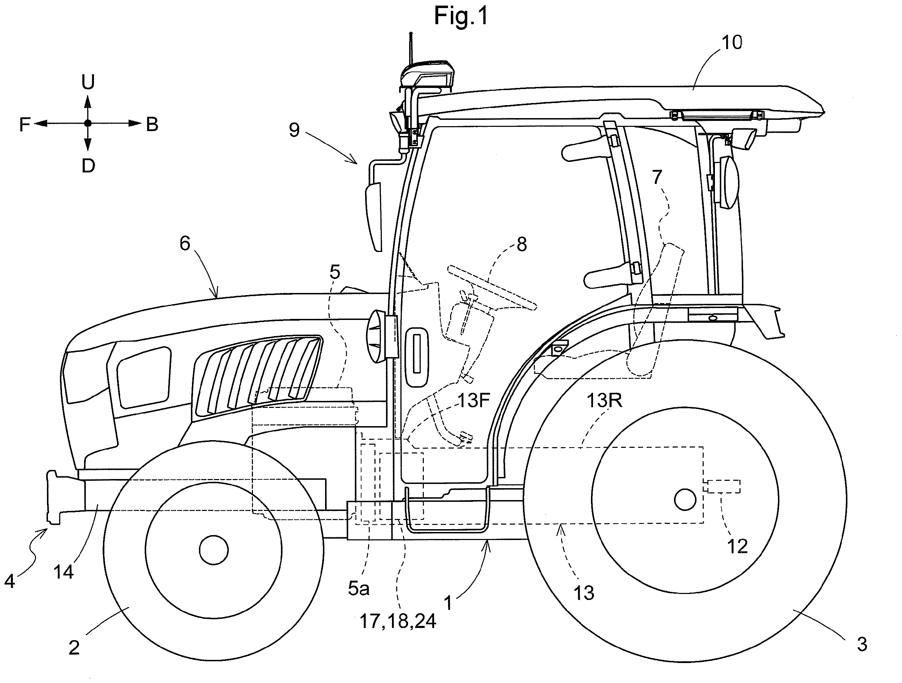

Note that, in the following description, in terms of a traveling vehicle body of a tractor (an example of a "hybrid work vehicle"), a direction of an arrow F illustrated in Fig. 1 and so on is referred to as a "vehicle-body front side," a direction of an arrow B is referred to as a "vehicle-body rear side," a direction of an arrow U is referred to as a "vehicle-body upper side," a direction of an arrow D is referred to as a "vehicle-body lower side," a direction of an arrow L is referred to as a "vehicle-body left side," and a direction of an arrow R is referred to as a "vehicle-body right side."

### [Whole Configuration of Tractor]

As illustrated in Fig. 1, a tractor includes a traveling vehicle body 4 including a vehicle body frame 1, a pair of right and left front wheels 2 provided in a steerable and drivable manner in a front part of the vehicle body frame 1, and a pair of right and left rear wheels 3 provided in a drivable manner in a rear part of the vehicle body frame 1. The traveling vehicle body 4 has a front part in which a motor portion 6 including an engine 5 is provided. The traveling vehicle body 4 has a rear part in which a driving portion 9 is provided, the driving portion 9 including a driver seat 7 and a steering wheel 8 by which the front wheels 2 are steered. The driving portion 9 includes a cabin 10 covering a cabin space. The rear part of the traveling vehicle body 4 includes a link mechanism (not illustrated) via which a work device such as a rotary cultivating device (not illustrated) is connected in a vertically operable manner, and a power take-off shaft 12 configured to extract power from the engine 5 and transmit the power to the work device thus connected. The vehicle body frame 1 is constituted by the engine 5, a transmission case 13 adjacently provided behind the engine 5, and a front frame 14 connected to a lower part of the engine 5. In the present embodiment, the front wheels 2 and the rear wheels 3 are provided, but as the travel devices, a crawler travel device or a device in combination with wheels and a mini crawler can be employed.

### Traveling Power Transmission Device

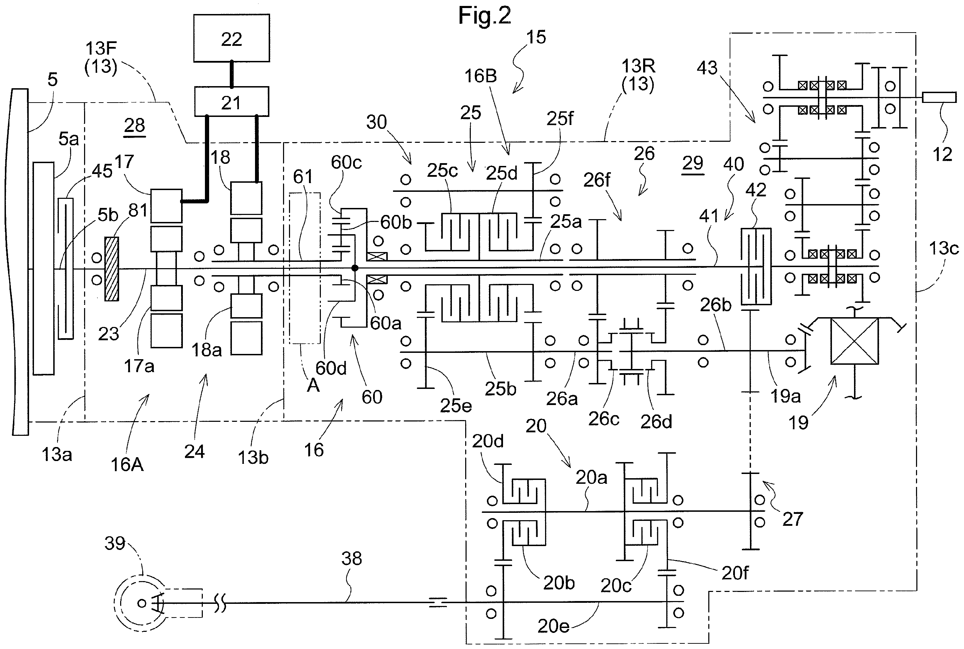

A traveling power transmission device 15 configured to transmit power from the engine 5 to the front wheels 2 and the rear wheels 3 includes the transmission case 13 adjacently provided behind the engine 5, as illustrated in Figs. 1, 2. The transmission case 13 is side by side with the engine 5 in a direction along a vehicle-body front-rear direction and extends along the vehicle-body front-rear direction. The engine 5 is provided in the front part of the vehicle body, and the transmission case 13 is connected to a rear part of the engine 5. As illustrated in Fig. 1, the transmission case 13 is connected to the engine 5 such that a flywheel housing portion 13F is provided in a front part of the transmission case 13, and a front end part of the flywheel housing portion 13F is connected to a rear end part of the engine 5. The flywheel housing portion 13F is configured to cover a flywheel 5a (see Fig. 2) provided in the rear part of the engine 5. The outside diameter of a largest diameter part of the flywheel housing portion 13F is made larger than the outside diameter of a part 13R of the transmission case 13, the part 13R being rearward of the flywheel housing portion 13F.

As illustrated in Fig. 2, in the transmission case 13, a hybrid transmission 16 is accommodated, the hybrid transmission 16 being configured to vary the power from the engine 5 and output the power to the front wheels 2 and the rear wheels 3.

### [Hybrid Transmission]

As illustrated in Fig. 2, the hybrid transmission 16 includes an input shaft 23 into which power from an output shaft 5b of the engine 5 is input, the input shaft 23 being provided in a front part of the transmission case 13, an electric transmission portion 16A adjacently placed behind the engine 5, and a gear transmission portion 16B placed rearward of the electric transmission portion 16A. The axial center of the input shaft 23 and the axial center of the output shaft 5b are placed on the same axial center.

As illustrated in Fig. 2, the electric transmission portion 16A is accommodated in an electric transmission chamber 28 formed in the front part of the transmission case 13. The gear transmission portion 16B is accommodated in a gear transmission chamber 29 formed in a rear part of the transmission case 13. The electric transmission chamber 28 is formed by a peripheral wall portion of the transmission case 13, a front wall portion 13a provided inside a front end part of the transmission case 13, and a partition wall portion 13b provided inside an intermediate part of the transmission case 13. The gear transmission chamber 29 is formed by the peripheral wall portion of the transmission case 13, a rear wall portion 13c placed in a rear end part of the transmission case 13, and the partition wall portion 13b. The electric transmission chamber 28 and the gear transmission chamber 29 are adjacent to each other across the partition wall portion 13b. The electric transmission chamber 28 and the gear transmission chamber 29 are separated from each other by the partition wall portion 13b such that the electric transmission chamber 28 and the gear transmission chamber 29 do not communicate with each other. The partition wall portion 13b has a peripheral edge part on an outer peripheral side, the peripheral edge part being connected to the inside of the peripheral wall portion of the transmission case 13. The partition wall portion 13b includes a sealing member (not illustrated) closing a gap between the partition wall portion 13b and a rotating shaft 61 in a through-hole provided in the partition wall portion 13b such that the rotating shaft 61 is passed through the through-hole. Hereby, the electric transmission chamber 28 and the gear transmission chamber 29 can be separated from each other by the partition wall portion 13b.

### [Electric Transmission Portion]

As illustrated in Fig. 2, the electric transmission portion 16A is provided between the engine 5 and the gear transmission portion 16B. The electric transmission portion 16A is adjacently placed behind the engine 5. The electric transmission portion 16A can be accommodated in a part of the transmission case 13 in which part the flywheel housing portion 13F having a large outside diameter is placed.

As illustrated in Fig. 2, the electric transmission portion 16A includes a motor generator portion 24. The motor generator portion 24 includes two motor generators 17, 18. The two motor generators 17, 18 are connected to an inverter device 21, and the inverter device 21 is connected to a battery 22.

As illustrated in Fig. 2, the two motor generators 17, 18 are disposed in the direction along the vehicle-body front-rear direction. The motor generator 17 on the front side out of the two motor generators 17, 18 is referred to as a first motor generator 17, and the motor generator 18 on the rear side out of the two motor generators 17, 18 is referred to as a second motor generator 18. A first rotation axial center of the first motor generator 17, a second rotation axial center of the second motor generator 18, and the axial center of the input shaft 23 of the transmission case 13 are placed on the same axial center.

As illustrated in Fig. 2, the first motor generator 17 includes a rotor 17a connected to the input shaft 23. The rotor 17a is connected to the input shaft 23 such that a connecting portion provided in a central part of the rotor 17a is connected to the input shaft 23.

### [Gear Transmission Portion]

As illustrated in Fig. 2, the gear transmission portion 16B is provided on a side opposite to a side where the engine 5 is placed, across the electric transmission portion 16A. The gear transmission portion 16B is adjacently placed behind the electric transmission portion 16A.

As illustrated in Fig. 2, the gear transmission portion 16B includes a gear driving mechanism 30 without a motor generator. The gear driving mechanism 30 includes a planetary device 60 placed in a front part of the gear transmission portion 16B, a forward-reverse switching device 25 placed rearward of the planetary device 60, a sub-transmission 26 placed rearward of the forward-reverse switching device 25, a rear-wheel differential mechanism 19 placed rearward of the sub-transmission 26, a front-wheel transmission 20 placed forward of the rear-wheel differential mechanism 19, and a gear linkage mechanism 27 configured to transmit an output from the sub-transmission 26 to the front-wheel transmission 20.

As illustrated in Fig. 2, the planetary device 60 includes a sun gear 60a, a planetary gear 60b, an internal gear 60c meshing with the planetary gear 60b, and a carrier 60d supporting the planetary gear 60b. The sun gear 60a is connected to a rotor 18a of the second motor generator 18 via the rotating shaft 61. The rotating shaft 61 is outwardly engaged to the input shaft 23 in a rotatable manner. The carrier 60d is connected to the input shaft 23. The internal gear 60c is connected to an input shaft 25a of the forward-reverse switching device 25.

In the planetary device 60, the carrier 60d is driven by power from the input shaft 23, and the sun gear 60a is driven by the second motor generator 18 via the rotating shaft 61, so that the power from the engine 5 is combined with driving force of the second motor generator 18. Resultant combined power is transmitted from the internal gear 60c to the input shaft 25a of the forward-reverse switching device 25.

As illustrated in Fig. 2, the forward-reverse switching device 25 includes the input shaft 25a placed rearward of the planetary device 60, and an output shaft 25b disposed in parallel with the input shaft 25a. The axial center of the input shaft 25a is placed on the axial center of the input shaft 23. The input shaft 25a is provided with a forward clutch 25c and a reverse clutch 25d. A forward gear mechanism 25e is provided over the forward clutch 25c and the output shaft 25b. A reverse gear mechanism 25f is provided over the reverse clutch 25d and the output shaft 25b.

In the forward-reverse switching device 25, the output from the planetary device 60 is input into the input shaft 25a. When the forward clutch 25c is engaged, the power from the input shaft 25a is switched to forward power by the forward gear mechanism 25e and the forward clutch 25c, transmitted to the output shaft 25b, and output from the output shaft 25b. When the reverse clutch 25d is engaged, the power of the input shaft 25a is switched to rearward power by the reverse gear mechanism 25f and the reverse clutch 25d, transmitted to the output shaft 25b, and output from the output shaft 25b.

As illustrated in Fig. 2, the sub-transmission 26 includes an input shaft 26a connected to the output shaft 25b of the forward-reverse switching device 25, and an output shaft 26b provided rearward of the input shaft 26a. The input shaft 26a and the output shaft 26b are placed on the same axial center. A high-speed clutch 26c is provided between a rear part of the input shaft 26a and a front part of the output shaft 26b. A low-speed gear mechanism 26f and a low-speed clutch 26d are provided over the input shaft 26a and a rear part of the output shaft 26b.

In the sub-transmission 26, the output from the forward-reverse switching device 25 is input into the input shaft 26a. When the high-speed clutch 26c is engaged, the power from the input shaft 26a is transmitted to the output shaft 26b via the high-speed clutch 26c without being changed in speed, and power on a high-speed side is output from the output shaft 26b. When the low-speed clutch 26d is engaged, the power from the input shaft 26a is changed in speed to power on a low-speed side by the low-speed gear mechanism 26f and the low-speed clutch 26d, and the power on the low-speed side is transmitted to the output shaft 26b and then output from the output shaft 26b. The power on the low-speed side has a speed lower than that of the power on the high-speed side to be output when the high-speed clutch 26c is engaged.

As illustrated in Fig. 2, the rear-wheel differential mechanism 19 includes an input shaft 19a into which the output from the sub-transmission 26 is input. The input shaft 19a is connected to a rear part of the output shaft 26b of the sub-transmission 26. The gear linkage mechanism 27 is provided over the output shaft 26b of the sub-transmission 26 and an input shaft 20a of the front-wheel transmission 20 and is configured to transmit the power from the output shaft 26b of the sub-transmission 26 to the input shaft 20a of the front-wheel transmission 20.

As illustrated in Fig. 2, the front-wheel transmission 20 includes the input shaft 20a connected to the gear linkage mechanism 27 and an output shaft 20e disposed in parallel with the input shaft 20a. The input shaft 20a is provided with a constant speed clutch 20b and a speed increasing clutch 20c. A constant speed gear mechanism 20d is provided over the constant speed clutch 20b and the output shaft 20e. A speed increasing gear mechanism 20f is provided over the speed increasing clutch 20c and the output shaft 20e.

In the front-wheel transmission 20, the output from the sub-transmission 26 is transmitted to the input shaft 20a via the gear linkage mechanism 27. When the constant speed clutch 20b is engaged, the power from the input shaft 20a is changed in speed to constant speed power by the constant speed clutch 20b and the constant speed gear mechanism 20d, and the constant speed power is transmitted to the output shaft 20e and then output from the output shaft 20e. The constant speed power is power by which the front wheels 2 and the rear wheels 3 are driven at the same speed. When the speed increasing clutch 20c is engaged, the power from the input shaft 20a is changed in speed to speed-increasing power by the speed increasing clutch 20c and the speed increasing gear mechanism 20f, and the speed-increasing power is transmitted to the output shaft 20e and then output from the output shaft 20e. The speed-increasing power is power by which the front wheels 2 are driven at a speed higher than that of the rear wheels 3. The power from the output shaft 20e of the front-wheel transmission 20 is transmitted to a front-wheel differential mechanism 39 via a rotating shaft 38.

In the traveling power transmission device 15, when the front wheels 2 and the rear wheels 3 are to be driven, the power from the engine 5 and the driving force from the second motor generator 18 are transmitted to the front wheels 2 and the rear wheels 3.

That is, the power from the input shaft 23 is transmitted to the carrier 60d of the planetary device 60 to drive the planetary gear 60b, the driving force from the second motor generator 18 is transmitted to the sun gear 60a of the planetary device 60 to drive the sun gear 60a, so that the power (engine power) from the engine 5 is combined with the driving force (motor power) from the second motor generator 18 by the planetary device 60, and combined power is output from the internal gear 60c. The combined power from the planetary device 60 is transmitted to the input shaft 25a of the forward-reverse switching device 25 and is output by being switched between forward power and rearward power in the forward-reverse switching device 25. The forward power or the rearward power from the forward-reverse switching device 25 is transmitted to the input shaft 26a of the sub-transmission 26 and is output by being changed in speed between power on the high-speed side and power on the low-speed side in the sub-transmission 26. The power from the sub-transmission 26 is input into the rear-wheel differential mechanism 19 and is output from the rear-wheel differential mechanism 19 toward the right and left rear wheels 3. The power from the sub-transmission 26 is transmitted to the input shaft 20a of the front-wheel transmission 20 via the gear linkage mechanism 27 and is output by being changed in speed to constant speed power or speed-increasing power in the front-wheel transmission 20. The constant speed power or the speed-increasing power from the front-wheel transmission 20 is output toward the front-wheel differential mechanism 39 (the front wheels 2).

The second motor generator 18 mainly works as an electric machine for driving the front wheels 2 and the rear wheels 3, but the second motor generator 18 works as a generator at the time of deceleration.

In the traveling power transmission device 15, when the front wheels 2 and the rear wheels 3 are to be driven, the first motor generator 17 is driven by the power transmitted from the engine 5 to the input shaft 23 and generates electric power. The electric power generated by the first motor generator 17 is supplied as charge power to the battery 22 via the inverter device 21 or supplied to the second motor generator 18 as driving power via the inverter device 21.

As illustrated in Fig. 2, a clutch 45 is provided over the output shaft 5b and the input shaft 23. The clutch 45 is configured to be switched between an engaged state (an ON state) and a disengaged state (an OFF state) by a hydraulic electromagnetic valve or the like. When the clutch 45 is switched to the engaged state, the power from the engine 5 is transmitted to the electric transmission portion 16A and the gear transmission portion 16B, so that the hybrid transmission 16 is switched to a hybrid mode in which the front wheels 2 and the rear wheels 3 are driven by the power from the engine 5 and the driving force from the second motor generator 18, and electric power is generate by the first motor generator 17. When the clutch 45 is switched to the disengaged state, power transmission from the engine 5 to the electric transmission portion 16A and the gear transmission portion 16B is cut off, so that the hybrid transmission 16 is switched to an electrically-driven mode in which the front wheels 2 and the rear wheels 3 are driven only by the driving force from the second motor generator 18. As the clutch 45, a dry clutch can be employed.

As illustrated in Fig. 2, it is possible to provide a planetary reduction gear in a space A between the second motor generator 18 and the planetary device 60, the planetary reduction gear being configured to transmit the driving force of the second motor generator 18 to the planetary device 60 by reducing the speed of the driving force.

### [Lubrication, Cooling of Hybrid Transmission]

A lubricant for lubricating and cooling the first motor generator 17 and the second motor generator 18 is accumulated in the electric transmission chamber 28. A lubricant for lubricating the gear driving mechanism 30 is accumulated in the gear transmission chamber 29.

In the electric transmission chamber 28 and the gear transmission chamber 29, lubricants having the same oil quality can be accumulated. As the lubricants having the same oil quality to be accumulated in the electric transmission chamber 28 and the gear transmission chamber 29, a lubricant excellent in lubrication performance can be employed, for example. The electric transmission chamber 28 and the gear transmission chamber 29 are separated from each other, and therefore, it is possible to accumulate, in the electric transmission chamber 28, a lubricant different in quality from the lubricant accumulated in the gear transmission chamber 29. In a case where lubricants different in quality are accumulated in the electric transmission chamber 28 and the gear transmission chamber 29, it is possible to employ a lubricant more excellent in cooling performance than lubrication performance as the lubricant accumulated in the electric transmission chamber 28 so that the first motor generator 17 and the second motor generator 18 are cooled efficiently, and it is also possible to employ a lubricant more excellent in lubrication performance than cooling performance as the lubricant accumulated in the gear transmission chamber 29 so that the gear driving mechanism 30 is lubricated efficiently, for example.

The electric transmission chamber 28 and the gear transmission chamber 29 are separated from each other, and therefore, it is possible to set the level of the lubricant in the electric transmission chamber 28 to be different from the level of the lubricant in the gear transmission chamber 29. That is, in a case where the lubricant more excellent in cooling performance than lubrication performance is accumulated in the electric transmission chamber 28, and the lubricant more excellent in lubrication performance than cooling performance is accumulated in the gear transmission chamber 29, the level of the lubricant in the electric transmission chamber 28 can be set to be higher than the level of the lubricant in the gear transmission chamber 29.

In either of the case where lubricants having the same quality are accumulated in the electric transmission chamber 28 and in the gear transmission chamber 29 and the case where lubricants different in quality are accumulated in the electric transmission chamber 28 and in the gear transmission chamber 29, the level of the lubricant in the electric transmission chamber 28 can be set to be lower than the level of the lubricant in the gear transmission chamber 29.

That is, in the gear transmission chamber 29, the lubricant is accumulated to the level set such that the lubricant easily reaches the gears placed at different positions in the up-down direction, so that the gear driving mechanism 30 is lubricated efficiently. In the electric transmission chamber 28, the lubricant is accumulated only to the level set to be lower than the level in the gear transmission chamber 29 so that the first motor generator 17 and the second motor generator 18 do not enter the lubricant so deeply, thereby restraining a driving load to be applied to the first motor generator 17 and the second motor generator 18.

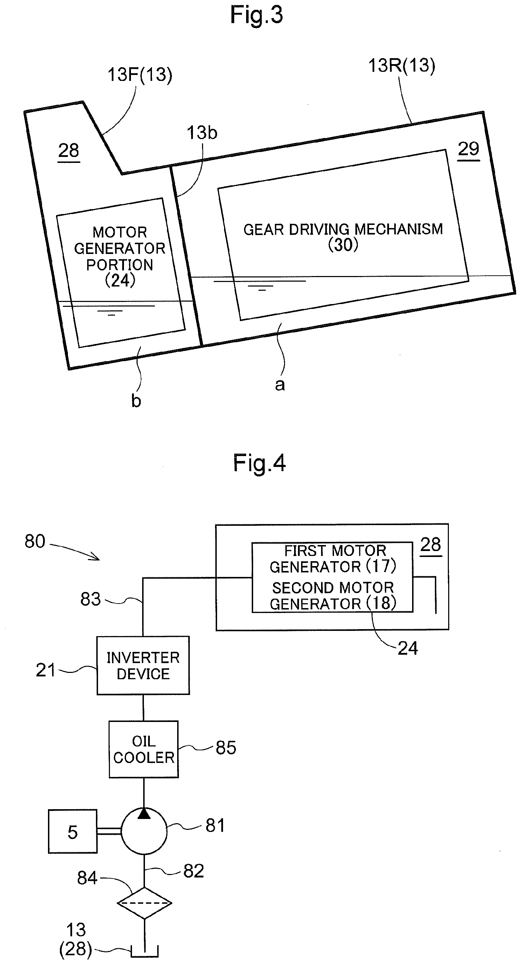

In a case where the vehicle body is inclined in the front-rear direction, the transmission case 13 is inclined in the front-rear direction. As illustrated in Fig. 3, in a case where the transmission case 13 has an inclined posture (a forward-descending inclined posture) in which the electric transmission chamber 28 side is lowered, a lubricant a accumulated in the gear transmission chamber 29 flows toward the electric transmission chamber 28, but the lubricant a thus flowing is received by the partition wall portion 13b, so that the lubricant a does not flow into the electric transmission chamber 28. Hereby, regardless of the inclination of the transmission case 13, the amount of the lubricant in the gear transmission chamber 29 does not decrease, so that the gear driving mechanism 30 can be kept lubricated. Although not illustrated herein, in a case where the transmission case 13 has an inclined posture (a rearward-descending inclined posture) in which the gear transmission chamber 29 side is lowered, a lubricant b accumulated in the electric transmission chamber 28 flows toward the gear transmission chamber 29, but the lubricant b thus flowing is received by the partition wall portion 13b, so that the lubricant b does not flow into the gear transmission chamber 29. Hereby, regardless of the inclination of the transmission case 13, the amount of the lubricant in the electric transmission chamber 28 does not decrease, so that the motor generator portion 24 can be kept lubricated and cooled.

### [Oil Supply Mechanism]

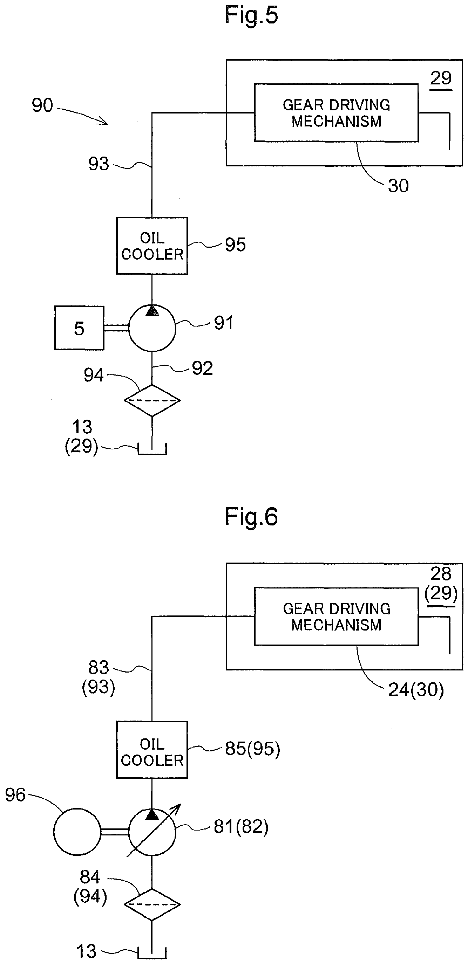

The traveling power transmission device 15 includes a first oil supply mechanism 80 (see Fig. 4) and a second oil supply mechanism 90 (see Fig. 5) different from the first oil supply mechanism 80. The traveling power transmission device 15 is configured such that the lubricant is supplied to the motor generator portion 24 by the first oil supply mechanism 80, and the lubricant is supplied to the gear driving mechanism 30 by the second oil supply mechanism 90.

As illustrated in Fig. 4, the first oil supply mechanism 80 includes a first hydraulic pump 81. The first hydraulic pump 81 includes a suction portion connected to an oil extraction portion (not illustrated) formed in a bottom portion of the transmission case 13 via a first suction oil passage 82. The oil extraction portion communicates with the electric transmission chamber 28. The first hydraulic pump 81 includes a discharge portion connected to the electric transmission chamber 28 via a first oil supply passage 83. The first oil supply passage 83 is connected to an oil jet nozzle (not illustrated) provided in the electric transmission chamber 28.

In the first oil supply mechanism 80, the first hydraulic pump 81 is driven by the power from the engine 5, so that the lubricant accumulated in the electric transmission chamber 28 is sucked by the first hydraulic pump 81 through the first suction oil passage 82 and supplied from the first hydraulic pump 81 to the electric transmission chamber 28 through the first oil supply passage 83. In the electric transmission chamber 28, the lubricant is emitted from the oil jet nozzle toward the motor generator portion 24, so that the lubricant is supplied to the first motor generator 17 and the second motor generator 18.

In the present embodiment, the first hydraulic pump 81 is constituted by a trochoid pump provided in the input shaft 23 as illustrated in Fig. 2. The first hydraulic pump 81 is not limited to the trochoid pump, and various hydraulic pumps of different types such as a gear pump are also employable. In the present embodiment, the first suction oil passage 82 includes a filter 84. In the first oil supply passage 83, an oil cooler 85 and a cooling portion in the inverter device 21 are provided. The lubricant from the first hydraulic pump 81 is cooled by the oil cooler 85 and supplied to the cooling portion of the inverter device 21 so that the inverter device 21 is cooled, and after the inverter device 21 is cooled, the lubricant is supplied to the motor generator portion 24. Note that, after the lubricant is cooled by the oil cooler 85, the lubricant may be supplied to the first motor generator 17 and the second motor generator 18 without being used for cooling of the inverter device 21.

As illustrated in Fig. 5, the second oil supply mechanism 90 includes a second hydraulic pump 91. The second hydraulic pump 91 includes a suction portion connected to an oil extraction portion (not illustrated) formed in the bottom portion of the transmission case 13 via a second suction oil passage 92. The oil extraction portion communicates with the gear transmission chamber 29. The second hydraulic pump 91 includes a discharge portion connected to the gear transmission chamber 29 via a second oil supply passage 93. The second oil supply passage 93 is connected to an oil jet nozzle (not illustrated) provided in the gear transmission chamber 29.

In the second oil supply mechanism 90, the second hydraulic pump 91 is driven by the power from the engine 5, so that the lubricant accumulated in the gear transmission chamber 29 is sucked by the second hydraulic pump 91 through the second suction oil passage 92 and is supplied from the second hydraulic pump 91 to the gear transmission chamber 29 through the second oil supply passage 93. The lubricant is emitted from the oil jet nozzle toward the gear driving mechanism 30 in the gear transmission chamber 29 and is supplied to the gears.

In the present embodiment, the second suction oil passage 92 includes a filter 94. The second oil supply passage 93 includes an oil cooler 95. The lubricant from the second hydraulic pump 91 is cooled by the oil cooler 95 and then supplied to the gear driving mechanism 30.

As the first hydraulic pump 81 and the second hydraulic pump 91, a variable capacity hydraulic pump is employable as illustrated in Fig. 6. As a power source for driving the first hydraulic pump 81 and the second hydraulic pump 91, an electric motor 96 is employable as illustrated in Fig. 6. The electric motor 96 can be configured to be driven by electric power generated by the first motor generator 17.

### [Work Power Transmission Device]

As illustrated in Fig. 1, the power take-off shaft 12 is supported by the rear part of the transmission case 13. As illustrated in Fig. 2, in the transmission case 13, a work power transmission device 40 configured to transmit the power from the engine 5 to the power take-off shaft 12 is accommodated.

As illustrated in Fig. 2, the work power transmission device 40 is provided behind the input shaft 23 in a state where the work power transmission device 40 extends along the vehicle-body front-rear direction. The work power transmission device 40 includes a rotating shaft 41 having a front part connected to the input shaft 23, a work clutch 42 connected to a rear part of the rotating shaft 41, and a power take-off shaft transmission 43 configured to vary the output from the work clutch 42 and transmit the output to the power take-off shaft 12. The axial center of the rotating shaft 41 and the axial center of the input shaft 23 are placed on the same axial center. The input shaft 23 and the rotating shaft 41 are connected in an interlocking manner directly or via a joint.

In the work power transmission device 40, the power from the input shaft 23 is transmitted to the rotating shaft 41 and is transmitted from the rotating shaft 41 to the power take-off shaft 12 via the work clutch 42 and the power take-off shaft transmission 43. The work clutch 42 switches between an engaged state where the power from the engine 5 is transmitted to the power take-off shaft 12 and a disengaged state where power transmission from the engine 5 to the power take-off shaft 12 is cut off.

### [Different Embodiments]

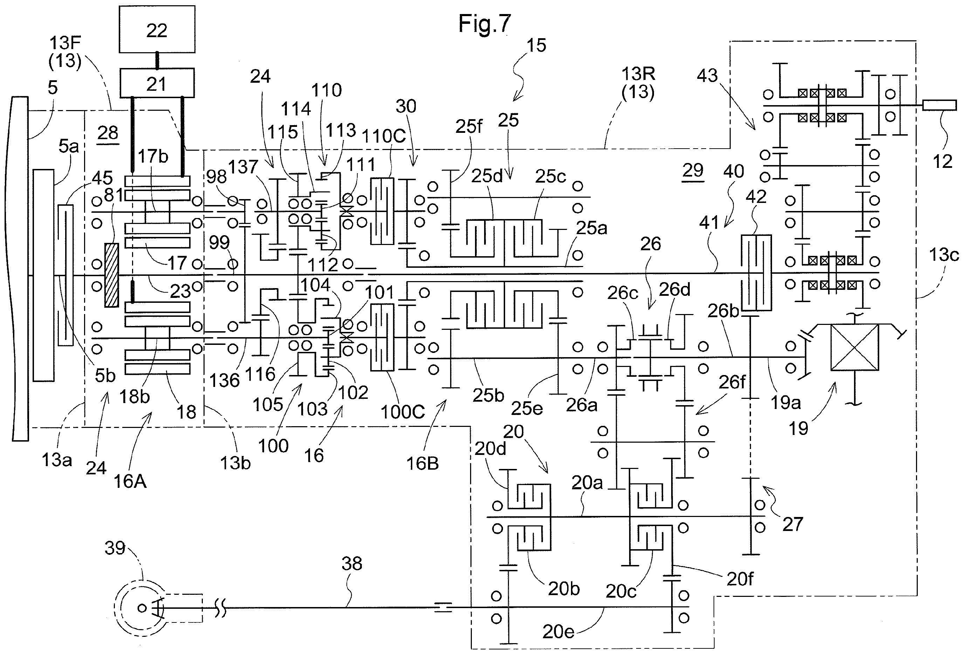

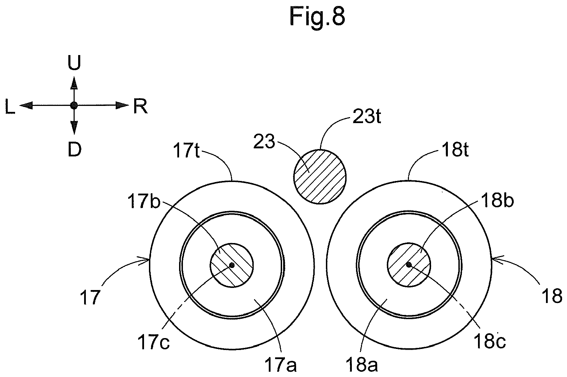

(1) Fig. 7 is a schematic view illustrating the traveling power transmission device 15 according to a first different embodiment. Fig. 8 is a front view illustrating the arrangement of the motor generators in the traveling power transmission device 15 according to the first different embodiment. In the traveling power transmission device 15 according to the first different embodiment, the motor generator portion 24 in the electric transmission portion 16A includes two motor generators 17, 18, as illustrated in Fig. 7. In the traveling power transmission device 15 according to the first different embodiment, as illustrated in Fig. 7, the gear driving mechanism 30 in the gear transmission portion 16B includes a gear driving mechanism 98, a low-speed planetary transmission portion 100, a low-speed clutch 100C, a high-speed planetary transmission portion 110, a high-speed clutch 110C, the forward-reverse switching device 25, the sub-transmission 26, the rear-wheel differential mechanism 19, the front-wheel transmission 20, and the gear linkage mechanism 27. The forward-reverse switching device 25, the sub-transmission 26, the rear-wheel differential mechanism 19, the front-wheel transmission 20, and the gear linkage mechanism 27 have the same configurations as the configurations of the forward-reverse switching device 25, the sub-transmission 26, the rear-wheel differential mechanism 19, the front-wheel transmission 20, and the gear linkage mechanism 27 illustrated in Fig. 2.

As illustrated in Fig. 8, the two motor generators 17, 18 are disposed in a direction along a vehicle-body width direction. As illustrated in Figs. 7, 8, the two motor generators 17, 18 have respective rotation axial centers along the vehicle-body front-rear direction. The first motor generator 17 out of the two motor generators 17, 18 has a first rotation axial center 17c, the second motor generator 18 out of the two motor generators 17, 18 has a second rotation axial center 18c, and the first rotation axial center 17c and the second rotation axial center 18c are disposed in parallel to each other. As the first motor generator 17 and the second motor generator 18, motor generators having a long length in the direction along the vehicle-body front-rear direction can be employed, in comparison with a case where the two motor generators 17, 18 are disposed in the direction along the vehicle-body front-rear direction.

As illustrated in Fig. 8, the input shaft 23 of the transmission case 13 is provided to extend in the vehicle-body front-rear direction, between the first motor generator 17 and the second motor generator 18. The input shaft 23 extends in the front- rear direction above the first rotation axial center 17c of the first motor generator 17 and the second rotation axial center 18c of the second motor generator 18. The input shaft 23 has an upper end 23t placed above an upper end 17t of the first motor generator 17 and above an upper end 18t of the second motor generator 18.

As illustrated in Fig. 7, the gear driving mechanism 30 includes a driving mechanism input shaft 99 behind the input shaft 23 of the transmission case 13. The axial center of the driving mechanism input shaft 99 and the axial center of the input shaft 23 are placed on the same axial center. The driving mechanism input shaft 99 has a front part connected to a rear part of the input shaft 23, so that the power from the input shaft 23 is transmitted to the driving mechanism input shaft 99. The gear driving mechanism 98 is provided in the front part of the gear transmission portion 16B. The gear driving mechanism 98 is provided over the driving mechanism input shaft 99 and a rotor support shaft 17b of the first motor generator 17 and is configured to transmit the power from the input shaft 23 to the first motor generator 17.

As illustrated in Fig. 7, the low-speed planetary transmission portion 100 includes a sun gear 101, a planetary gear 102, an internal gear 103, and a carrier 104. The low-speed planetary transmission portion 100 is provided behind the second motor generator 18 in a state where the rotation axial center of the sun gear 101 and a rotor support shaft 18b (the second rotation axial center 18c) of the second motor generator 18 are placed on the same axial center. The internal gear 103 is connected to the driving mechanism input shaft 99 via a gear linkage mechanism 105. The sun gear 101 includes a first input shaft 136, and the first input shaft 136 is connected to the rotor support shaft 18b of the second motor generator 18.

In the low-speed planetary transmission portion 100, the power from the input shaft 23 is transmitted to the internal gear 103 to drive the internal gear 103, and the driving force from the second motor generator 18 is transmitted to the sun gear 101 to drive the sun gear 101, so that the power from the engine 5 and the driving force from the second motor generator 18 are combined to generate combined power on the low-speed side. The combined power on the low-speed side is output from the carrier 104.

The low-speed clutch 100C is provided between an output portion of the low-speed planetary transmission portion 100 and the input shaft 25a of the forward-reverse switching device 25 and is configured such that, when the low-speed clutch 100C is switched to an engaged state (an ON state), the low-speed clutch 100C transmits the combined power on the low-speed side, output from the low-speed planetary transmission portion 100, to the forward-reverse switching device 25, and when the low-speed clutch 100C is switched to a disengaged state (an OFF state), the low-speed clutch 100C cuts off power transmission from the low-speed planetary transmission portion 100 to the forward-reverse switching device 25.

As illustrated in Fig. 7, the high-speed planetary transmission portion 110 is provided behind the first motor generator 17. The high-speed planetary transmission portion 110 includes a sun gear 111, a planetary gear 112, an internal gear 113, and a carrier 114. The carrier 114 is connected to the driving mechanism input shaft 99 via a gear linkage mechanism 115. The sun gear 111 includes a second input shaft 137, and the second input shaft 137 is connected to the rotor support shaft 18b of the second motor generator 18 via a gear linkage mechanism 116 and the first input shaft 136.

In the high-speed planetary transmission portion 110, the power from the input shaft 23 is transmitted to the carrier 114 to drive the planetary gear 112, and the driving force from the second motor generator 18 is transmitted to the sun gear 111 to drive the sun gear 111, so that the engine power from the input shaft 23 and the driving force from the second motor generator 18 are combined to generate combined power on the high-speed side. The combined power on the high-speed side is output from the internal gear 113. The combined power on the high-speed side is combined power at a speed higher than that of the combined power on the low-speed side that is generated by combining in the low-speed planetary transmission portion 100.

The high-speed clutch 110C is provided between an output portion of the high-speed planetary transmission portion 110 and the input shaft 25a of the forward-reverse switching device 25 and is configured such that, when the high-speed clutch 110C is switched to an engaged state (an ON state), the high-speed clutch 110C transmits the combined power on the high-speed side, output from the high-speed planetary transmission portion 110, to the forward-reverse switching device 25, and when the high-speed clutch 110C is switched to a disengaged state (an OFF state), the high-speed clutch 110C cuts off power transmission from the high-speed planetary transmission portion 110 to the forward-reverse switching device 25.

The present embodiment employs an arrangement configuration in which the rotation axial center of the sun gear 101 as the rotation axial center of the low-speed planetary transmission portion 100 and the second rotation axial center 18c of the second motor generator 18 are placed on the same axial center. Instead of this configuration, an arrangement configuration in which the rotation axial center of the low-speed planetary transmission portion 100 and the second rotation axial center 18c of the second motor generator 18 are placed on different axial centers is employable.

In the traveling power transmission device 15 according to the first different embodiment, when the front wheels 2 and the rear wheels 3 are to be driven, the power from the engine 5 and the driving force from the second motor generator 18 are transmitted to the front wheels 2 and the rear wheels 3.

That is, the power (engine power) transmitted from the engine 5 to the input shaft 23 is combined with the driving force (motor power) from the second motor generator 18 into combined power on the low-speed side by the low-speed planetary transmission portion 100, and the power (engine power) transmitted from the engine 5 to the input shaft 23 is combined with the driving force (motor power) from the second motor generator 18 into combined power on the high-speed side by the high-speed planetary transmission portion 110. When the low-speed clutch 100C is switched to the engaged state and the high-speed clutch 110C is switched to the disengaged state, the combined power on the low-speed side from the low-speed planetary transmission portion 100 is transmitted to the input shaft 25a of the forward-reverse switching device 25 and then transmitted from the output shaft 25b of the forward-reverse switching device 25 to the sub-transmission 26. Then, the combined power is transmitted from the sub-transmission 26 to the rear-wheel differential mechanism 19 and the front-wheel transmission 20. When the high-speed clutch 110C is switched to the engaged state and the low-speed clutch 100C is switched to the disengaged state, the combined power on the high-speed side from the high-speed planetary transmission portion 110 is transmitted to the input shaft 25a of the forward-reverse switching device 25 and then transmitted from the output shaft 25b of the forward-reverse switching device 25 to the sub-transmission 26. Then, the combined power is transmitted from the sub-transmission 26 to the rear-wheel differential mechanism 19 and the front-wheel transmission 20.

In the traveling power transmission device 15 according to the first different embodiment, when the front wheels 2 and the rear wheels 3 are to be driven, the power transmitted from the engine 5 to the input shaft 23 is input into the first motor generator 17 via the driving mechanism input shaft 99 and the gear driving mechanism 98, so that the first motor generator 17 is driven to generate electric power.

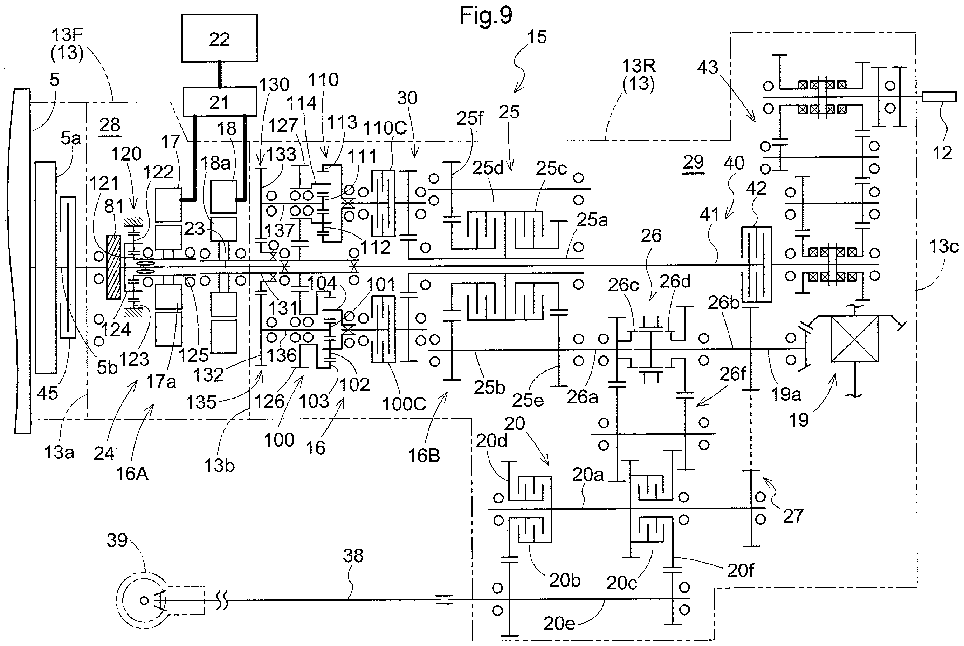

(2) Fig. 9 is a schematic view illustrating the traveling power transmission device 15 according to a second different embodiment. As illustrated in Fig. 9, in the traveling power transmission device 15 according to the second different embodiment, the motor generator portion 24 in the electric transmission portion 16A includes two motor generators 17, 18. In the traveling power transmission device 15 according to the second different embodiment, the gear driving mechanism 30 of the gear transmission portion 16B includes the low-speed planetary transmission portion 100, the low-speed clutch 100C, the high-speed planetary transmission portion 110, the high-speed clutch 110C, the forward-reverse switching device 25, the sub-transmission 26, the rear-wheel differential mechanism 19, the front-wheel transmission 20, and the gear linkage mechanism 27.

The low-speed planetary transmission portion 100, the low-speed clutch 100C, the high-speed planetary transmission portion 110, and the high-speed clutch 110C have the same configurations as the configurations of the low-speed planetary transmission portion 100, the low-speed clutch 100C, the high-speed planetary transmission portion 110, and the high-speed clutch 110C included in the traveling power transmission device 15 of the first different embodiment. The forward-reverse switching device 25, the sub-transmission 26, the rear-wheel differential mechanism 19, the front-wheel transmission 20, and the gear linkage mechanism 27 have the same configurations as the configurations of the forward-reverse switching device 25, the sub-transmission 26, the rear-wheel differential mechanism 19, the front-wheel transmission 20, and the gear linkage mechanism 27 illustrated in Fig. 2.

The two motor generators 17, 18 are disposed in the direction along the vehicle-body front-rear direction. The first motor generator 17 on the front side out of the two motor generators 17, 18 is provided closer to a side where the engine 5 is placed than the second motor generator 18 on the rear side out of the two motor generators 17, 18, and the second motor generator 18 is provided closer to a side where the gear transmission portion 16B is placed than the first motor generator 17. The rotation axial center of the first motor generator 17, the rotation axial center of the second motor generator 18, and the axial center of the input shaft 23 of the transmission case 13 are placed on the same axial center.

An input transmission mechanism 120 is provided closer to the side where the engine 5 is placed than the first motor generator 17. The input transmission mechanism 120 connects the first motor generator 17 to the input shaft 23 of the transmission case 13 and is configured to input the power from the input shaft 23 into the first motor generator 17.

More specifically, as illustrated in Fig. 9, the input transmission mechanism 120 includes a sun gear 121, a planetary gear 122, an internal gear 123, and a carrier 124. The sun gear 121 is connected to the rotor 17a of the first motor generator 17 in a state where the sun gear 121 rotates around its rotation axial center placed on the axial center of the input shaft 23. The sun gear 121 is connected to the rotor 17a via a rotating shaft 125. The carrier 124 is connected to the input shaft 23. The internal gear 123 is fixed to the transmission case 13.

The input transmission mechanism 120 is constituted by a planetary gear mechanism, and the input transmission mechanism 120 increases the speed of the power transmitted from the engine 5 to the input shaft 23 and inputs the power into the rotor 17a of the first motor generator 17. In the present embodiment, the input transmission mechanism 120 is constituted by a planetary gear mechanism, but as the input transmission mechanism 120, a gear linkage mechanism other than the planetary gear mechanism is employable. Further, as the input transmission mechanism 120, a transmission mechanism configured to transmit the power from the input shaft 23 to the first motor generator 17 without increasing the speed of the power.

As illustrated in Fig. 9, the internal gear 103 of the low-speed planetary transmission portion 100 is connected to the input shaft 23 via a first linkage mechanism 126. The carrier 114 of the high-speed planetary transmission portion 110 is connected to the input shaft 23 via a second linkage mechanism 127.

An output transmission mechanism 130 is provided closer to the side where the gear transmission portion 16B is placed than the second motor generator 18. The output transmission mechanism 130 connects the second motor generator 18 to an input portion 135 placed in a front part of the gear transmission portion 16B such that the output transmission mechanism 130 transmits the driving force from the second motor generator 18 to the input portion 135.

More specifically, as illustrated in Fig. 9, the input portion 135 of the gear transmission portion 16B includes a first input shaft 136 connected to the sun gear 101 of the low-speed planetary transmission portion 100, and a second input shaft 137 connected to the sun gear 111 of the high-speed planetary transmission portion 110. The output transmission mechanism 130 includes a rotating shaft 131 connected to the rotor 18a of the second motor generator 18, a first gear linkage mechanism 132 connecting the rotating shaft 131 to the first input shaft 136, and a second gear linkage mechanism 133 connecting the rotating shaft 131 to the second input shaft 137.

In the traveling power transmission device 15 according to the second different embodiment, when the front wheels 2 and the rear wheels 3 are to be driven, the power from the engine 5 and the driving force from the second motor generator 18 are transmitted to the front wheels 2 and the rear wheels 3.

That is, the power from the input shaft 23 is transmitted to the internal gear 103 of the low-speed planetary transmission portion 100 via the first linkage mechanism 126, and the driving force from the second motor generator 18 is transmitted to the sun gear 101 of the low-speed planetary transmission portion 100 via the output transmission mechanism 130 and the first input shaft 136, so that the power (engine power) from the engine 5 is combined with the driving force (motor power) from the second motor generator 18 into combined power on the low-speed side by the low-speed planetary transmission portion 100. The combined power on the low-speed side is output to the low-speed clutch 100C. The power from the input shaft 23 is transmitted to the carrier 114 of the high-speed planetary transmission portion 110 via the second linkage mechanism 127, and the driving force from the second motor generator 18 is transmitted to the sun gear 111 of the high-speed planetary transmission portion 110 via the output transmission mechanism 130 and the second input shaft 137, so that the power (engine power) from the engine 5 is combined with the driving force (motor power) from the second motor generator 18 into combined power on the high-speed side by the high-speed planetary transmission portion 110. The combined power on the high-speed side is output to the high-speed clutch 110C. When the low-speed clutch 100C is switched to an engaged state (an ON state) and the high-speed clutch 110C is switched to a disengaged state (an OFF state), the combined power on the low-speed side from the low-speed clutch 100C is transmitted to the sub-transmission 26 via the forward-reverse switching device 25 and then transmitted from the sub-transmission 26 to the rear-wheel differential mechanism 19 and the front-wheel transmission 20.

When the low-speed clutch 100C is switched to the disengaged state (the OFF state) and the high-speed clutch 110C is switched to the engaged state (the ON state), the combined power on the high-speed side from the high-speed clutch 110C is transmitted to the sub-transmission 26 via the forward-reverse switching device 25 and then transmitted from the sub-transmission 26 to the rear-wheel differential mechanism 19 and the front-wheel transmission 20.

In the traveling power transmission device 15 according to the second different embodiment, when the front wheels 2 and the rear wheels 3 are to be driven, the power transmitted from the engine 5 to the input shaft 23 is input into the first motor generator 17 via the input transmission mechanism 120, so that the first motor generator 17 is driven to generate electric power.

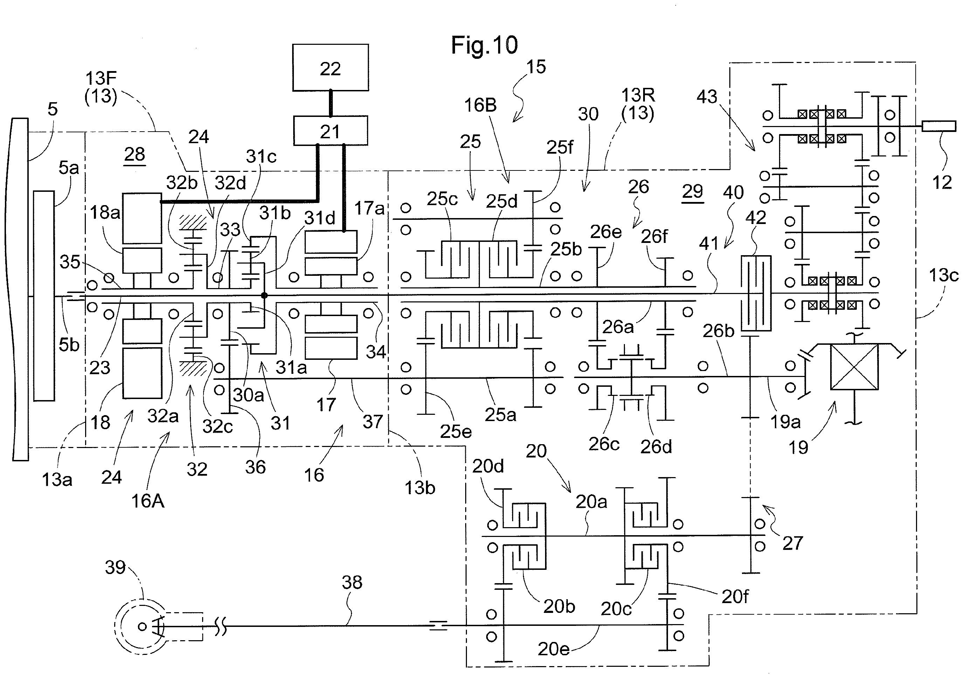

(3) Fig. 10 is a schematic view illustrating the traveling power transmission device 15 according to a third different embodiment. As illustrated in Fig. 10, in the traveling power transmission device 15 according to the third different embodiment, the motor generator portion 24 in the electric transmission portion 16A includes two motor generators 17, 18. The electric transmission portion 16A includes a first planetary device 31 and a second planetary device 32. In the traveling power transmission device 15 according to the third different embodiment, the gear driving mechanism 30 in the gear transmission portion 16B includes the forward-reverse switching device 25, the sub-transmission 26, the rear-wheel differential mechanism 19, the front-wheel transmission 20, and the gear linkage mechanism 27.

The rear-wheel differential mechanism 19, the front-wheel transmission 20, and the gear linkage mechanism 27 have the same configurations as the configurations of the rear-wheel differential mechanism 19, the front-wheel transmission 20, and the gear linkage mechanism 27 illustrated in Fig. 2.

The output shaft 25b of the forward-reverse switching device 25 is provided with the forward clutch 25c and the reverse clutch 25d, the forward gear mechanism 25e is provided over the input shaft 25a and the forward clutch 25c, and the reverse gear mechanism 25f is provided over the input shaft 25a and the reverse clutch 25d.

In the sub-transmission 26, the input shaft 26a and the output shaft 26b are provided in parallel with each other. The output shaft 26b is provided with the high-speed clutch 26c and the low-speed clutch 26d. A high-speed gear mechanism 26e is provided over the input shaft 26a and the high-speed clutch 26c, and a low-speed gear mechanism 26f is provided over the input shaft 26a and the low-speed clutch 26d.

The two motor generators 17, 18 are disposed in the direction along the vehicle-body front-rear direction. The first motor generator 17 on the rear side out of the two motor generators 17, 18 is provided on a side opposite to the side where the engine 5 is placed, across the second motor generator 18 on the front side out of the two motor generators 17, 18. The rotation axial center of the first motor generator 17, the rotation axial center of the second motor generator 18, and the axial center of the input shaft 23 of the transmission case 13 are placed on the same axial center.

The first planetary device 31 and the second planetary device 32 are disposed along the vehicle-body front-rear direction between the first motor generator 17 and the second motor generator 18. The second planetary device 32 is placed forward of the first planetary device 31.

The first planetary device 31 includes a first sun gear 31a, a first planetary gear 31b, a first internal gear 31c, and a first carrier 31d. The second planetary device 32 includes a second sun gear 32a, a second planetary gear 32b, a second internal gear 32c, and a second carrier 32d. The rotation axial center of the first sun gear 31a of the first planetary device 31, the rotation axial center of the second sun gear 32a of the second planetary device 32, the rotation axial center of the first motor generator 17, and the rotation axial center of the second motor generator 18 are placed on the same axial center.

In the first planetary device 31, the first carrier 31d is connected to the input shaft 23. In the second planetary device 32, the second internal gear 32c is fixed to the transmission case 13, and the second carrier 32d is connected to the first sun gear 31a via a rotating shaft 33.

As illustrated in Fig. 10, the first motor generator 17 is connected to the first internal gear 31c of the first planetary device 31. The first motor generator 17 is connected to the first internal gear 31c by connecting the rotor 17a of the first motor generator 17 to the first internal gear 31c via a rotating shaft 34. The second motor generator 18 is connected to the second sun gear 32a of the second planetary device 32. The second motor generator 18 is connected to the second sun gear 32a by connecting the rotor 18a of the second motor generator 18 to the second sun gear 32a via a rotating shaft 35.

In the traveling power transmission device 15 according to the third different embodiment, when the front wheels 2 and the rear wheels 3 are to be driven, the power from the engine 5 and the driving force from the second motor generator 18 are transmitted to the front wheels 2 and the rear wheels 3.

That is, the power from the input shaft 23 is input into the first carrier 31d of the first planetary device 31 so that the first planetary gear 31b is driven to drive the first planetary device 31, and the driving force from the second motor generator 18 is input into the second sun gear 32a of the second planetary device 32 so that the second planetary device 32 is driven. The power (engine power) from the engine 5 is combined with the driving force (motor power) from the second motor generator 18 by the first planetary device 31 and the second planetary device 32, and the combined power is transmitted from an output gear 30a to the input shaft 25a of the forward-reverse switching device 25 via a transmission gear 36 and a transmission shaft 37 and then transmitted from the forward-reverse switching device 25 to the sub-transmission 26. The power from the sub-transmission 26 is transmitted to the rear-wheel differential mechanism 19. The power from the sub-transmission 26 is transmitted to the front-wheel transmission 20 via the gear linkage mechanism 27 and output from the front-wheel transmission 20 toward the front-wheel differential mechanism 39.

The second motor generator 18 mainly works as an electric machine for driving the front wheels 2 and the rear wheels 3, but the second motor generator 18 works as a generator at the time of deceleration.

In the traveling power transmission device 15 according to the third different embodiment, when the front wheels 2 and the rear wheels 3 are to be driven, the power from the first internal gear 31c of the first planetary device 31 is transmitted to the first motor generator 17 via the rotating shaft 34, so that the first motor generator 17 is driven by the power from the first internal gear 31c and generates electric power.

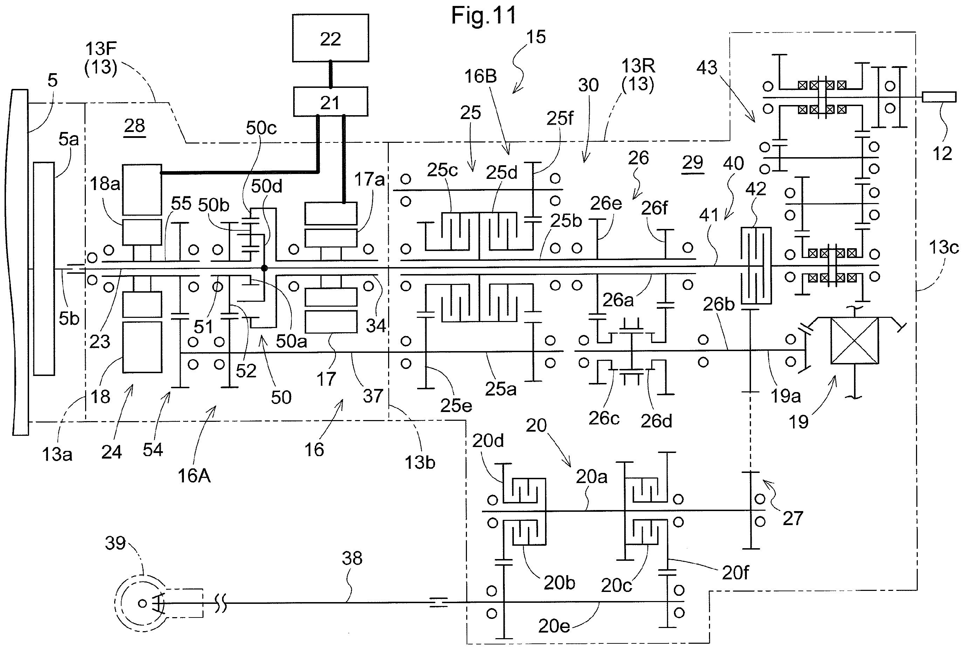

(4) Fig. 11 is a schematic view illustrating the traveling power transmission device 15 according to a fourth different embodiment. As illustrated in Fig. 11, in the traveling power transmission device 15 according to the fourth different embodiment, the motor generator portion 24 in the electric transmission portion 16A includes two motor generators 17, 18. The electric transmission portion 16A includes one planetary device 50. In the traveling power transmission device 15 according to the fourth different embodiment, the gear driving mechanism 30 in the gear transmission portion 16B includes the forward-reverse switching device 25, the sub-transmission 26, the rear-wheel differential mechanism 19, the front-wheel transmission 20, and the gear linkage mechanism 27.

The rear-wheel differential mechanism 19, the front-wheel transmission 20, and the gear linkage mechanism 27 have the same configurations as the configurations of the rear-wheel differential mechanism 19, the front-wheel transmission 20, and the gear linkage mechanism 27 illustrated in Fig. 2. The forward-reverse switching device 25 and the sub-transmission 26 have the same configurations as the forward-reverse switching device 25 and the sub-transmission 26 illustrated in Fig. 10.

The two motor generators 17, 18 are disposed in the direction along the vehicle-body front-rear direction. The first motor generator 17 on the rear side out of the two motor generators 17, 18 is provided on a side opposite to the side where the engine 5 is placed, across the second motor generator 18 on the front side out of the two motor generators 17, 18. The rotation axial center of the first motor generator 17, the rotation axial center of the second motor generator 18, and the axial center of the input shaft 23 of the transmission case 13 are placed on the same axial center.

The planetary device 50 is provided between the first motor generator 17 and the second motor generator 18. The planetary device 50 includes a sun gear 50a, a planetary gear 50b, an internal gear 50c, and a carrier 50d. The carrier 50d is connected to the input shaft 23. The sun gear 50a is connected to an output gear 52 via a rotating shaft 51. The output gear 52 is connected to the transmission shaft 37. The second motor generator 18 is connected to the transmission shaft 37. The second motor generator 18 is connected to the transmission shaft 37 by connecting the rotor 18a of the second motor generator 18 to the transmission shaft 37 via a rotating shaft 55 and a gear linkage mechanism 54. The internal gear 50c of the planetary device 50 is connected to the first motor generator 17. The internal gear 50c is connected to the first motor generator 17 by connecting the rotor 17a of the first motor generator 17 to the internal gear 50c via the rotating shaft 34.

In the traveling power transmission device 15 according to the fourth different embodiment, when the front wheels 2 and the rear wheels 3 are to be driven, the power from the engine 5 and the driving force from the second motor generator 18 are transmitted to the front wheels 2 and the rear wheels 3.

That is, the power from the input shaft 23 is input into the carrier 50d so that the planetary gear 50b is driven to drive the planetary device 50, and the power from the sun gear 50a is transmitted from the output gear 52 to the transmission shaft 37. The driving force from the second motor generator 18 is transmitted to the transmission shaft 37 via the rotating shaft 55 and the gear linkage mechanism 54, and power obtained by varying the power (engine power) input from the engine 5 into the planetary device 50 is joined to the driving force (motor power) from the second motor generator 18 in the transmission shaft 37. The joined power is transmitted to the input shaft 25a of the forward-reverse switching device 25 and then transmitted from the output shaft 25b of the forward-reverse switching device 25 to the sub-transmission 26. The power from the sub-transmission 26 is transmitted to the rear-wheel differential mechanism 19. The power from the sub-transmission 26 is transmitted to the front-wheel transmission 20 via the gear linkage mechanism 27.

In the traveling power transmission device 15 according to the fourth different embodiment, when the front wheels 2 and the rear wheels 3 are to be driven, the power from the internal gear 50c of the planetary device 50 is transmitted to the rotor 17a of the first motor generator 17 via the rotating shaft 34, so that the first motor generator 17 is driven and generates electric power.

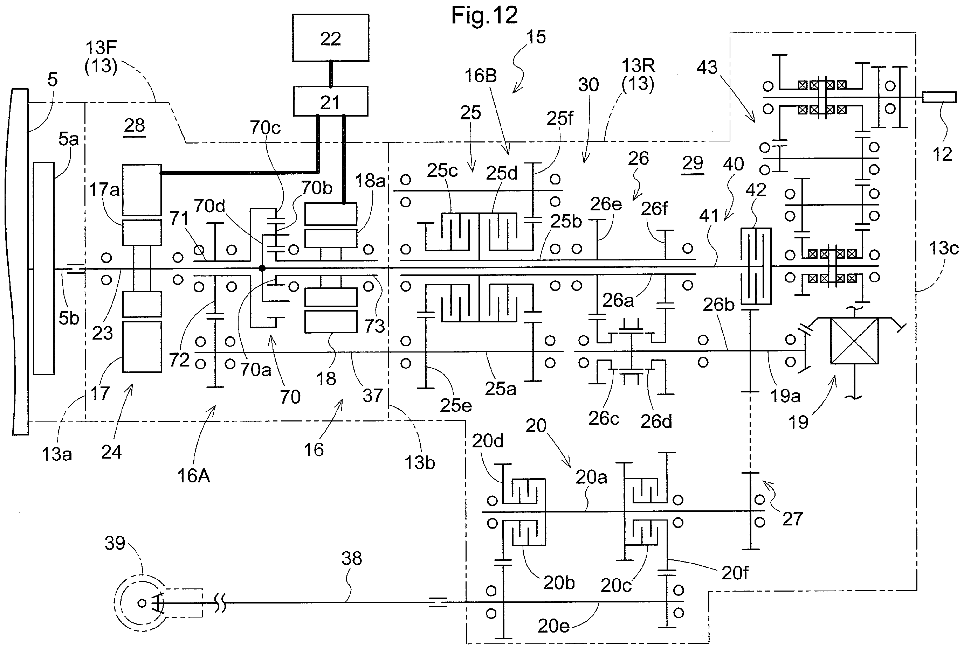

(5) Fig. 12 is a schematic view illustrating the traveling power transmission device 15 according to a fifth different embodiment. As illustrated in Fig. 12, in the traveling power transmission device 15 according to the fifth different embodiment, the motor generator portion 24 in the electric transmission portion 16A includes two motor generators 17, 18. The electric transmission portion 16A includes one planetary device 70. In the traveling power transmission device 15 according to the fifth different embodiment, the gear driving mechanism 30 in the gear transmission portion 16B includes the forward-reverse switching device 25, the sub-transmission 26, the rear-wheel differential mechanism 19, the front-wheel transmission 20, and the gear linkage mechanism 27.

The rear-wheel differential mechanism 19, the front-wheel transmission 20, and the gear linkage mechanism 27 have the same configurations as the configurations of the rear-wheel differential mechanism 19, the front-wheel transmission 20, and the gear linkage mechanism 27 illustrated in Fig. 2. The forward-reverse switching device 25 and the sub-transmission 26 have the same configurations as the forward-reverse switching device 25 and the sub-transmission 26 illustrated in Fig. 10.

The two motor generators 17, 18 are disposed in the direction along the vehicle-body front-rear direction. The first motor generator 17 on the front side out of the two motor generators 17, 18 is provided closer to the side where the engine 5 is placed than the second motor generator 18 on the rear side out of the two motor generators 17, 18. The rotation axial center of the first motor generator 17, the rotation axial center of the second motor generator 18, and the axial center of the input shaft 23 of the transmission case 13 are placed on the same axial center.

The planetary device 70 includes a sun gear 70a, a planetary gear 70b, an internal gear 70c, and a carrier 70d. The carrier 70d is connected to the input shaft 23. The internal gear 70c is connected to an output gear 72 via a rotating shaft 71. The sun gear 70a is connected to the rotor 18a of the second motor generator 18 via a rotating shaft 73. The rotor 17a of the first motor generator 17 is supported by the input shaft 23.

In the traveling power transmission device 15 according to the fifth different embodiment, when the front wheels 2 and the rear wheels 3 are to be driven, the power from the engine 5 and the driving force of the second motor generator 18 are transmitted to the front wheels 2 and the rear wheels 3.

That is, the power from the input shaft 23 is input into the carrier 70d to drive the planetary gear 70b, and the driving force from the second motor generator 18 is input into the sun gear 70a to drive the sun gear 70a, so that the power (engine power) from the engine 5 is combined with the driving force (motor power) from the second motor generator 18 by the planetary device 70. The combined power is transmitted from the internal gear 70c to the output gear 72, transmitted from the output gear 72 to the forward-reverse switching device 25 via the transmission shaft 37, and then transmitted from the forward-reverse switching device 25 to the sub-transmission 26. The power from the sub-transmission 26 is transmitted to the rear-wheel differential mechanism 19 and the front-wheel transmission 20.

In the traveling power transmission device 15 according to the fifth different embodiment, when the front wheels 2 and the rear wheels 3 are to be driven, the first motor generator 17 is driven by the power from the input shaft 23 and performs power generation.

(6) The above embodiments deal with examples in which the electric transmission portion 16A is provided between the engine 5 and the gear transmission portion 16B. However, the present invention is not limited to this. The gear transmission portion 16B may be divided into a front divisional gear transmission portion and a rear divisional gear transmission portion along the vehicle-body front-rear direction, and the electric transmission portion 16A may be provided between the front divisional gear transmission portion and the rear divisional gear transmission portion.

(7) The above embodiments deal with examples in which the motor generator portion 24 includes two motor generators 17, 18. However, the present invention is not limited to this. The motor generator portion 24 may include only one motor generator or three or more motor generators.

(8) The above embodiments deal with examples in which the engine 5 is provided in the front part of the vehicle body, and the transmission case 13 is adjacently provided behind the engine 5. However, the engine 5 may be provided in the rear part of the vehicle body, and the transmission case 13 may be adjacently provided in front of the engine 5.

(9) The above embodiments deal with embodiments in which the engine 5 is connected to the transmission case 13. However, the engine 5 and the transmission case 13 may be distanced from each other without being connected to each other.

(10) The above embodiments deal with examples in which the front wheels 2 and the rear wheels 3 are provided as travel devices. However, the present invention is not limited to this. As the travel devices, a crawler travel device or a device in combination with wheels and a mini crawler may be employed.

(11) The above embodiments deal with examples in which the power take-off shaft 12 is provided, but the power take-off shaft 12 may not be provided.

### Industrial Applicability

The present invention can be applied to a hybrid work vehicle including an engine and a hybrid transmission. The hybrid transmission includes an electric transmission portion and a gear transmission portion such that the electric transmission portion and the gear transmission portion are disposed along the vehicle-body front-rear direction. The electric transmission portion includes a motor generator portion, and the gear transmission portion includes a gear driving mechanism without a motor generator. The hybrid transmission is configured to output power from the engine toward travel devices by varying the power.

### Description of the Reference Numerals

- 2: front wheel (travel device)
- 3: rear wheel (travel device)
- 5: engine
- 13: transmission case
- 13b: partition wall portion
- 16: hybrid transmission
- 16A: electric transmission portion
- 16B: gear transmission portion
- 17: motor generator
- 18: motor generator
- 24: motor generator portion
- 28: electric transmission chamber
- 29: gear transmission chamber
- 30: gear driving mechanism
- 80: first oil supply mechanism
- 81: first hydraulic pump
- 82: first oil supply passage
- 90: second oil supply mechanism
- 91: second hydraulic pump
- 92: second oil supply passage

## Claims

1. A hybrid work vehicle comprising:
an engine (5);
a hybrid transmission (16) including:
an electric transmission portion (16A) and
a gear transmission portion (16B),
the electric transmission portion (16A) and the gear transmission portion (16B) being disposed along a vehicle-body front-rear direction, the electric transmission portion (16A) including a motor generator portion (24), the gear transmission portion (16B) including a gear driving mechanism (30) without a motor generator, the hybrid transmission (16) being configured to vary power from the engine (5) and output the power to a travel device (2, 3) and
a transmission case (13) in which the hybrid transmission (16) is accommodated, the transmission case (13) being provided in a vehicle body in a state where the transmission case (13) is side by side with the engine (5) along the vehicle-body front-rear direction, wherein:
the transmission case (13) includes:
an electric transmission chamber (28) in which the electric transmission portion (16A) is accommodated; and
a gear transmission chamber (29) in which the gear transmission portion (16B) is accommodated,
the electric transmission chamber (28) and the gear transmission chamber (29) being adjacent to each other; and
the transmission case (13) includes a partition wall portion (13b) separating the electric transmission chamber (28) from the gear transmission chamber (29) in a non-communication manner.

2. The hybrid work vehicle according to claim 1, wherein
the motor generator portion (24) includes two motor generators (17, 18).

3. The hybrid work vehicle according to claim 1 or 2, wherein
the electric transmission portion (16A) is placed between the engine (5) and the gear transmission portion (16B).

4. The hybrid work vehicle according to any one of claims 1 to 3, wherein:
respective lubricants (b, a) are accumulated in the electric transmission chamber (28) and in the gear transmission chamber (29); and
the lubricant (b) in the electric transmission chamber (28) has a level different from a level of the lubricant (a) in the gear transmission chamber (29).

5. The hybrid work vehicle according to claim 4, wherein
the level of the lubricant (b) in the electric transmission chamber (28) is lower than the level of the lubricant (a) in the gear transmission chamber (29).

6. The hybrid work vehicle according to any one of claims 1 to 5, wherein:
respective lubricants (b, a) are accumulated in the electric transmission chamber (28) and in the gear transmission chamber (29); and
the lubricant (b) accumulated in the electric transmission chamber (28) and the lubricant (a) accumulated in the gear transmission chamber (29) are different in oil quality.

7. The hybrid work vehicle according to any one of claims 1 to 6, further comprising:
a first oil supply mechanism (80) including:
a first hydraulic pump (81); and
a first oil supply passage (82) connecting the first hydraulic pump (81) to the electric transmission chamber (28),
the first oil supply mechanism (80) being configured to supply a lubricant to the motor generator (17, 18); and
a second oil supply mechanism (90) including:
a second hydraulic pump (91); and
a second oil supply passage (92) connecting the second hydraulic pump (91) to the gear transmission chamber (29),
the second oil supply mechanism (90) being configured to supply a lubricant to the gear driving mechanism (30).

8. The hybrid work vehicle according to any one of claims 1 to 7, wherein:
the engine (5) is provided in a front part of the vehicle body; and
the transmission case (13) is adjacently provided behind the engine (5).
